(19) Europäisches Patentamt / European Patent Office / Office européen des brevets

(11) **EP 3 122 143 A1**

(12) **EUROPEAN PATENT APPLICATION**
published in accordance with Art. 153(4) EPC

(43) Date of publication:
**25.01.2017 Bulletin 2017/04**

(21) Application number: **14886162.8**

(22) Date of filing: **03.09.2014**

(51) Int Cl.:
**H04W 76/02** (2009.01)　　**H04L 1/00** (2006.01)

(86) International application number:
**PCT/CN2014/085867**

(87) International publication number:
**WO 2015/139429 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2014　CN 201410109367**

(71) Applicant: ZTE Corporation
**Shenzhen, Guangdong 518057 (CN)**

(72) Inventors:
• **SHI, Jing**
  **Shenzhen**
  **Guangdong 518057 (CN)**
• **DAI, Bo**
  **Shenzhen**
  **Guangdong 518057 (CN)**

• **XIA, Shuqiang**
  **Shenzhen**
  **Guangdong 518057 (CN)**
• **FANG, Huiying**
  **Shenzhen**
  **Guangdong 518057 (CN)**
• **LIU, Kun**
  **Shenzhen**
  **Guangdong 518057 (CN)**
• **CHEN, Xianming**
  **Shenzhen**
  **Guangdong 518057 (CN)**
• **LU, Zhaohua**
  **Shenzhen**
  **Guangdong 518057 (CN)**

(74) Representative: **Quinterno, Giuseppe et al**
**Jacobacci & Partners S.p.A.**
**Corso Emilia 8**
**10152 Torino (IT)**

(54) **METHOD, APPARATUS, AND SYSTEM FOR TRANSMITTING AND RECEIVING CONTROL INFORMATION**

(57)　Provided are a method, apparatus and system for transmitting and receiving control information. The method for transmitting control information includes that: a base station determines, according to predefined information, resources used for repeatedly sending control information, wherein the predefined information at least includes one of: a start sub-frame $k_0$, a System Frame Number (SFN), a repetition number or a repetition level N and a User Equipment (UE) Identity (ID); and the base station repeatedly sends the control information on the resources.

```
┌─────────────────────────────────────┐
│ A base station determines, according │
│ to predefined information, resources │── S102
│ used for repeatedly sending          │
│ control information                  │
└─────────────────────────────────────┘
                   │
                   ▼
┌─────────────────────────────────────┐
│ The base station repeatedly sends    │
│ the control information on the       │── S104
│ resources                            │
└─────────────────────────────────────┘
```

**Fig. 1**

EP 3 122 143 A1

**Description**

**Technical Field**

The present disclosure relates to the field of communications, and in particular to a method, apparatus and system for transmitting and receiving control information.

**Background**

A Machine Type Communication (MTC) User Equipment (UE) is also referred to as a Machine to Machine (M2M) user communication device, which is a main application form of the internet of things at the present stage. Recently, due to the high spectral efficiency of a Long-Term Evolution (LTE)/Long-Term Evolution Advance (LTE-Advance or LTE-A) system, more and more mobile operators select LTE/LTE-A as an evolution direction of a broadband wireless communication system. LTE/LTE-A-based MTC multi-type data services will be more attractive.

In the LTE/LTE-A system in the related art, transmission is conducted based on dynamic scheduling of each sub-frame. That is, each sub-frame may be used to transmit different control channels.

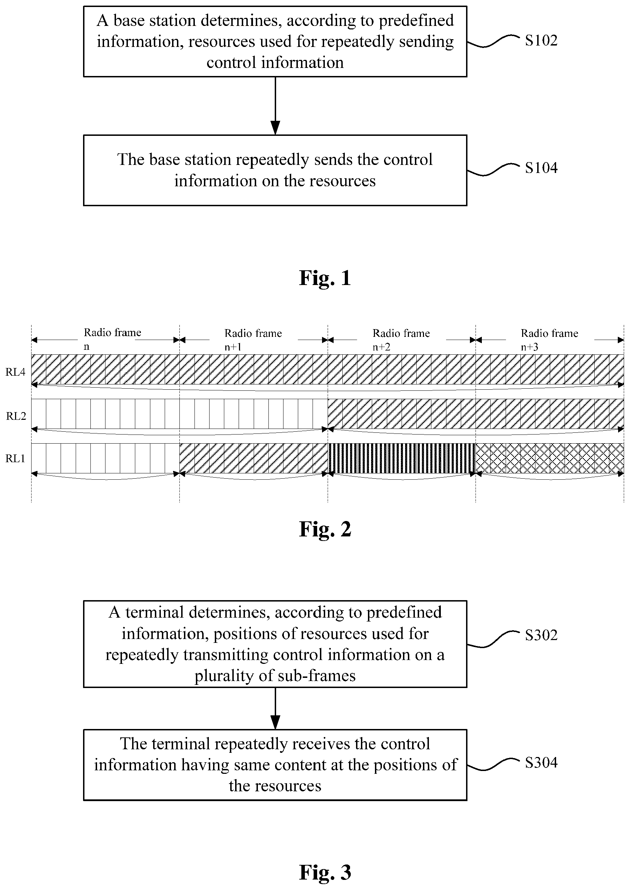

In the LTE/LTE-A, a Physical Downlink Control Channel (PDCCH) and an Enhanced Physical Downlink Control Channel (EPDCCH) are defined. Structures of the control channels in the sub-frames are shown in Fig. 1. Information carried by a Physical Control Format Indicator Channel (PCFICH) is configured to indicate the number of Orthogonal Frequency Division Multiplexing (OFDM) symbols for transmitting a PDCCH in one sub-frame. A Physical Hybrid Automatic Repeat-reQuest (ARQ) Indicator Channel (PHICH) is configured to carry Acknowledgement/Non-Acknowledgement (ACK/NACK) feedback information for uplink data transmission. Downlink control channels are blindly detected, and a terminal attempts to demodulate the downlink control channels by means of different aggregation levels and candidate sets in a certain search space. Current UE-specific search spaces are shown in Table 1 and Table 2. The search spaces are constituted by candidate sets corresponding to different aggregation levels, when demodulating the control channels, the terminal needs to attempt to demodulate each candidate set until a certain candidate set is demodulated correctly, and if no candidate set can be demodulated correctly, the terminal deems that its own control channel is not received.

Table 1 PDCCH search space

| Search space $S_k^{(L)}$ | | | Number of PDCCH candidates $M^{(L)}$ |
|---|---|---|---|
| Type | Aggregation level L | Size [in CCEs] | |
| U E-specific | 1 | 6 | 6 |
| | 2 | 12 | 6 |
| | 4 | 8 | 2 |
| | 8 | 16 | 2 |

Table 2 EPDCCH search space (One Distributed EPDCCH-PRB-set-Case 3)

| $N_{RB}^X$ | Number of EPDCCH candidates $M_p^{(L)}$ for Case 3 | | | | |
|---|---|---|---|---|---|
| | L=1 | L=2 | L=4 | L=8 | L=16 |
| 2 | 8 | 4 | 2 | 1 | 0 |
| 4 | 4 | 5 | 4 | 2 | 1 |
| 8 | 4 | 4 | 4 | 2 | 2 |

The PDCCH/EPDCCH is configured to carry Downlink Control Information (DCI), including uplink scheduling information, downlink scheduling information and uplink power control information.

Usually, an MTC terminal can obtain DCI by demodulating a PDCCH/EPDCCH at each sub-frame, so as to achieve demodulation of a Physical Downlink Share Channel (PDSCH) and obtain scheduling indication information for a Physical Uplink Share Channel (PUSCH).

Among MTC application terminals, the coverage performance of a certain type of terminal is reduced due to limits to the location of the terminal or its own characteristics. For instance, most of smart metering type MTC terminals are fixedly mounted in a low-coverage performance environment such as a basement. This type of terminal mainly sends small-packet data, has low requirement on data rate, and can tolerate a larger data transmission delay. Because this type of terminal has low requirement on data rate, for a data channel, correct transmission of small-packet data can be guaranteed by means of a lower modulation coding rate and a mode of repeated sending for many times on a time domain. When repeatedly transmitted control information is received, a maximum blind detection count is exponentially increased along with the quantity of repeat sub-frames. Thus, it is needed to limit a blind detection path. According to a common method for limiting a blind detection path, the same aggregation level and the same candidate set are adopted for each sub-frame. However, the repeated transmission count can reach dozens of magnitudes, although reduction of the maximum blind detection count is ensured using the same candidate set, a specific resource position corresponding to the same candidate set on each sub-frame is still random, which causes great increase of a collision probability of control information between coverage enhancement terminals and increase of a scheduling blocking rate. Thus, it is needed to further limit a resource used for repeated transmission.

An effective solution has not been proposed yet currently for the above problems in the related art.

## Summary

The embodiments of the present disclosure provide a method, apparatus and system for transmitting and receiving control information, which are intended to at least solve the problems, in the related art, of increase of a collision probability of control information between coverage enhancement terminals and increase of a scheduling blocking rate due to the fact that a specific resource position corresponding to the same candidate set on each sub-frame is random.

According to one embodiment of the present disclosure, a method for transmitting control information is provided, which may include that: a base station determines, according to predefined information, resources used for repeatedly sending control information, wherein the predefined information at least includes one of: a start sub-frame ko, a System Frame Number (SFN), a repetition number or a repetition level N and a UE Identity (ID); and the base station repeatedly sends the control information on the resources.

Optionally, the resources may be located at multiple sub-frames, wherein the resources are located at a same position on multiple sub-frames or locations of the resources on multiple sub-frames have a specific mapping relationship.

Optionally, when it is needed to execute a new repeated sending operation, resources used for the new repeated sending operation may be re-determined according to the predefined information corresponding to the new repeated sending operation.

Optionally, the positions of the resources used for the new repeated sending operation and the positions of the resources used for the previous repeated sending operation may be different.

Optionally, the step that the resources used for the new repeated sending operation are re-determined according to the predefined information corresponding to the new repeated sending operation may include that: a value of a sub-frame k used for the new repeated sending operation is determined according to the predefined information corresponding to the new repeated sending operation; and the resources used for the new repeated sending operation are different from the resources used for the previous repeated sending operation by limiting a start position value of a search space of the sub-frame k.

Optionally, the step that the resources used for the new repeated sending operation are re-determined according to the predefined information corresponding to the new repeated sending operation may include that: a value of a sub-frame k and an initial value $Y_{-1}$ used for the new repeated sending operation are determined according to the predefined information corresponding to the new repeated sending operation; and the resources allocated to the new repeated sending operation are different from the resources used for the previous repeated sending operation by limiting a start position value of a search space of the sub-frame k and the initial value $Y_{-1}$.

Optionally, if respective sub-frames have unequal quantities of Control Channel Elements (CCE), the positions of the resources in the respective sub-frames may be changed, such that the positions of the resources in the respective sub-frames are the same.

Optionally, the step that the positions of the resources in the respective sub-frames are changed may include that: resources used for transmitting the control information are selected from $N_{CCE,k}$ identical CCEs in the respective sub-frames, where $N_{CCE,k}$ is a minimum value of the quantities of the CCEs in respective sub-frames.

Optionally, the step that the positions of the resources in the respective sub-frames are changed may include that: after a sub-frame having fewer CCEs in the respective sub-frames is mapped, a CCE used for transmitting the control information in the sub-frame is determined.

Optionally, the step that the sub-frame having fewer CCEs in the respective sub-frames is mapped may include that: when resources used for transmitting the control information in the sub-frame having fewer CCEs are allocated, modulo processing is conducted on the quantity of the CCEs in the sub-frame, such that the positions of the resources, allocated at a start sub-frame, used for repeatedly sending the control information are able to be mapped to available positions in the sub-frame having fewer CCEs.

Optionally, the step that the sub-frame having fewer CCEs in the respective sub-frames is mapped may include that: when resources used for transmitting the control information in the sub-frame having fewer CCEs are allocated, many-to-one resource position mapping is carried out.

Optionally, the step that the positions of the resources in the respective sub-frames are changed may include that: the resources used for transmitting the control information are directed allocated, starting from an identical CCE serial number, for each sub-frame for repeatedly transmitting the control information.

Optionally, when the control information is control information for scheduling a public message, the base station may determine, according to the predefined information and a public message type, the resources used for repeatedly sending the control information.

Optionally, an area where the resources used for repeatedly sending the control information for scheduling a public message of a Paging message (Paging) type and a Random Access Response message (RAR) type are located may be larger than an area where the resources used for repeatedly sending the control information for scheduling a public message of a System Information Block (SIB) type are located.

Optionally, the area where the resources are located may include at least one of: an aggregation level quantity and a candidate set quantity.

According to another embodiment of the present disclosure, a method for receiving control information is provided, which may include that: a terminal determines, according to predefined information, positions of resources used for repeatedly transmitting control information on multiple sub-frames, wherein the predefined information at least includes one of: a start sub-frame ko, an SFN, a repetition number or a repetition level N and a UE ID; and the terminal repeatedly receives the control information having same content at the positions of the resources.

Optionally, the resources may be located at multiple sub-frames, and the positions of the resources on multiple sub-frames may be the same.

Optionally, when it is needed to execute a new repeated receiving operation, positions of resources corresponding to the new repeated receiving operation may be re-determined according to the predefined information corresponding to the new repeated receiving operation.

Optionally, the positions of the resources corresponding to the new repeated receiving operation and the positions of the resources corresponding to the previous repeated receiving operation may be different.

Optionally, the step that the positions of the resources corresponding to the new repeated receiving operation are re-determined according to the predefined information corresponding to the new repeated receiving operation may include that: a value of a sub-frame k corresponding to the new repeated receiving operation is determined according to the predefined information corresponding to the new repeated operation; and the positions of the resources corresponding to the new repeated receiving operation are different from the positions of the resources corresponding to the previous repeated receiving operation by limiting a start position value of a search space of the sub-frame k.

Optionally, the step that the positions of the resources corresponding to the new repeated receiving operation are re-determined according to the predefined information corresponding to the new repeated receiving operation may include that: a value of a sub-frame k and an initial value $Y_{-1}$ corresponding to the new repeated receiving operation are determined according to the predefined information corresponding to the new repeated receiving operation; and the positions of the resources allocated to the new repeated receiving operation are different from the positions of the resources used for the previous repeated receiving operation by limiting a start position value of a search space of the sub-frame k and the initial value $Y_{-1}$.

Optionally, if respective sub-frames have unequal quantities of CCEs, the positions of the resources in the respective sub-frames may be changed, such that the positions of the resources in the respective sub-frames are the same.

Optionally, the step that the positions of the resources in the respective sub-frames are changed may include that: resources used for receiving the control information are selected from $N_{CCE,k}$ identical CCEs in the respective sub-frames, where $N_{CCE,k}$ is a minimum value of the quantities of the CCEs in respective sub-frames.

Optionally, the step that the positions of the resources in the respective sub-frames are changed may include that: after a sub-frame having fewer CCEs in the respective sub-frames is mapped, a CCE used for transmitting the control information in the sub-frame having fewer CCEs is determined.

Optionally, the step that the sub-frame having fewer CCEs in the respective sub-frames is mapped may include that: when positions of resources used for transmitting the control information in the sub-frame having fewer CCEs are determined, CCE data in the sub-frame is processed modulo, such that the positions of the resources at a start sub-frame are able to be mapped to available positions in the sub-frame having fewer CCEs.

Optionally, the step that the sub-frame having fewer CCEs in the respective sub-frames is mapped may include that: when positions of resources used for transmitting the control information in the sub-frame having fewer CCEs are determined, many-to-one resource position mapping is carried out.

Optionally, the step that the positions of the resources in the respective sub-frames are changed may include that: the positions of the resources are directly determined, starting from an identical CCE serial number, for each sub-frame.

According to another embodiment of the present disclosure, an apparatus for transmitting control information is provided, which may include: a determination component, configured to determine, according to predefined information, resources used for repeatedly sending control information, wherein the predefined information at least includes one of: a start sub-frame ko, an SFN, a repetition number or a repetition level N and a UE ID; and a sending component, configured to repeatedly send the control information on the resources.

Optionally, the determination component may be further configured to re-determine, when it is needed to execute a new repeated sending operation, resources used for the new repeated sending operation according to the predefined information corresponding to the new repeated sending operation.

Optionally, the determination component may include: a first determination element, configured to determine a value of a sub-frame k used for the new repeated sending operation according to the predefined information corresponding to the new repeated sending operation; and a first adjustment element, configured to make the resources allocated to the new repeated sending operation different from the resources used for the previous repeated sending operation by limiting a start position value of a search space of the sub-frame k.

Optionally, the determination component may include: a second determination element, configured to determine a value of a sub-frame k and an initial value $Y_{-1}$ used for the new repeated sending operation according to the predefined information corresponding to the new repeated sending operation; and a second adjustment element, configured to make the resources allocated to the new repeated sending operation different from the resources used for the previous repeated sending operation by limiting a start position value of a search space of the sub-frame k and the initial value $Y_{-1}$.

Optionally, the apparatus may further include: a processing component, configured to change, if respective sub-frames have unequal quantities of CCEs, the positions of the resources in the respective sub-frames, such that the positions of the resources in the respective sub-frames are the same.

Optionally, the processing component may be configured to change the positions of the resources in multiple sub-frames by means of one of the following modes: selecting resources used for transmitting the control information from $Ncc_{E,k}$ identical CCEs in the respective sub-frames, where $N_{CCE,k}$ is a minimum value of the quantities of the CCEs in respective sub-frames; determining, after a sub-frame having fewer CCEs in the respective sub-frames is mapped, a CCE used for transmitting the control information in the sub-frame; and directly allocating, for each sub-frame used for repeatedly transmitting the control information, the resources used for transmitting the control information starting from an identical CCE serial number.

Optionally, the processing component may be configured to map the sub-frame having fewer CCEs in the respective sub-frames by means of one of the following modes: modulo processing, when the resources used for transmitting the control information in the sub-frame having fewer CCEs are allocated, the quantity of the CCEs in the sub-frame, such that the positions of the resources, allocated at a start sub-frame, used for repeatedly sending the control information are able to be mapped to available positions in the sub-frame having fewer CCEs; and carrying out many-to-one resource position mapping when the resources used for transmitting the control information in the sub-frame having fewer CCEs are allocated.

According to another embodiment of the present disclosure, an apparatus for receiving control information is provided, which may include: a determination component, configured to determine, according to predefined information, positions of resources used for repeatedly transmitting control information on multiple sub-frames, wherein the predefined information at least includes one of: a start sub-frame ko, an SFN, a repetition number or a repetition level N and a UE ID; and a receiving component, configured to repeatedly receive the control information having same content at the positions of the resources.

Optionally, the determination component may be further configured to re-determine, when it is needed to execute a new repeated receiving operation, positions of resources corresponding to the new repeated receiving operation according to the predefined information corresponding to the new repeated receiving operation.

Optionally, the determination component may include: a first determination element, configured to determine a value of a sub-frame k corresponding to the new repeated receiving operation according to the predefined information corresponding to the new repeated operation; and a first adjustment element, configured to make the positions of the resources corresponding to the new repeated receiving operation different from the positions of the resources corresponding to the previous repeated receiving operation by limiting a start position value of a search space of the sub-frame k.

Optionally, the determination component may include: a second determination element, configured to determine a value of a sub-frame k and an initial value $Y_{-1}$ corresponding to the new repeated receiving operation according to the predefined information corresponding to the new repeated receiving operation; and a second adjustment element, configured to make the positions of the resources allocated to the new repeated receiving operation different from the positions of the resources used for the previous repeated receiving operation by limiting a start position value of a search space of the sub-frame k and the initial value $Y_{-1}$.

Optionally, the apparatus may further include: a processing component, configured to change, if respective sub-frames have unequal quantities of CCEs, the positions of the resources in the respective sub-frames, such that the positions of the resources in multiple sub-frames are the same.

Optionally, the processing component may be configured to change the positions of the resources in the respective sub-frames by means of one of the following modes: selecting resources used for receiving the control information from $N_{CCE,k}$ identical CCEs in the respective sub-frames, where $N_{CCE,k}$ is a minimum value of the quantities of the CCEs in respective sub-frames; determining, after a sub-frame having fewer CCEs in the respective sub-frames is mapped, a CCE used for transmitting the control information in the sub-frame having fewer CCEs; and directly determining, for each sub-frame, the positions of the resources starting from an identical CCE serial number.

Optionally, the processing component may be configured to map the sub-frame having fewer CCEs in the respective sub-frames by means of one of the following modes: modulo processing, when positions of resources used for transmitting the control information in the sub-frame having fewer CCEs are determined, CCE data in the sub-frame, such that the positions of the resources at a start sub-frame are able to be mapped to available positions in the sub-frame having fewer CCEs; and carrying out many-to-one resource position mapping when positions of resources used for transmitting the control information in the sub-frame having fewer CCEs are determined.

According to another embodiment of the present disclosure, a system for transmitting control information is provided, which may include: a base station and a terminal, wherein the base station includes the apparatus for transmitting control information, and the terminal includes the apparatus for receiving control information.

By means of the embodiments of the present disclosure, positions of resources used for repeatedly transmitting control information are determined according to predefined information, such that the blocking rate of control information during repeated transmission via a coverage enhancement MTC terminal can be reduced, thereby guaranteeing normal sending and receiving of data information, and reducing system overheads and time delays.

**Brief Description of the Drawings**

The drawings illustrated herein are used to provide further understanding of the present disclosure, and form a part of the present disclosure. The schematic embodiments and illustrations of the embodiments of the present disclosure are used to explain the present disclosure, and do not form improper limits to the present disclosure. In the drawings:

Fig. 1 is a flowchart of a method for transmitting control information according to an embodiment of the present disclosure;
Fig. 2 is a diagram showing different repetition numbers/repetition levels of control information under a coverage enhancement scenario according to an embodiment of the present disclosure;
Fig. 3 is a flowchart of a method for receiving control information according to an embodiment of the present disclosure;
Fig. 4 is a structural diagram of an apparatus for transmitting control information according to an embodiment of the present disclosure;
Fig. 5 is a structural diagram of an apparatus for receiving control information according to an embodiment of the present disclosure;
Fig. 6 is a diagram showing occupation of resources used for repeatedly transmitting control information under a coverage enhancement scenario according to an embodiment of the present disclosure; and
Fig. 7 is a diagram showing occupation of resources used for repeatedly transmitting control information when respective sub-frames have an unequal number of CCEs under a coverage enhancement scenario according to an embodiment of the present disclosure.

**Detailed Description of the Embodiments**

The present disclosure will be illustrated below with reference to the drawings and in conjunction with the embodiments in detail. It is important to note that the embodiments of the present disclosure and the features in the embodiments can be combined under the condition of no conflicts.

According to an embodiment of the present disclosure, a method for transmitting control information is provided.

Fig. 1 is a flowchart of a method for transmitting control information according to an embodiment of the present disclosure. As shown in Fig. 1, the method mainly includes the steps as follows.

Step S102: A base station determines, according to predefined information, resources used for repeatedly sending control information, wherein the predefined information at least includes one of: a start sub-frame ko, an SFN, a repetition number or a repetition level N and a UE ID.

Step S104: The base station repeatedly sends the control information on the resources.

Optionally, the determined resources are located at multiple sub-frames in Step S102, wherein the resources allocated to multiple sub-frames are located at a same position or locations of the resources allocated to multiple sub-frames have a specific mapping relationship.

Optionally, when it is needed to execute a new repeated sending operation, resources used for the new repeated sending operation are re-determined according to the predefined information corresponding to the new repeated sending operation.

Optionally, the positions of the resources used for the new repeated sending operation and the positions of the resources used for the previous repeated sending operation are different. That is, positions of resources for two adjacent repeated sending operations are different, and positions of resources for two non-adjacent repeated sending operations may be identical or different, which will not be limited in the embodiments of the present disclosure specifically.

Optionally, a value of a sub-frame k may be limited according to at least one of the start sub-frame, the SFN and the repetition number, and resources allocated between different repeated sending operations are different by limiting the value of the sub-frame k. For instance,

$$L\left\{ (Y_k + m) \bmod \left\lfloor N_{\mathrm{CCE},k} / L \right\rfloor \right\} + i$$

$$k = \left\lfloor \frac{k_0 + h \times SFN}{N} \right\rfloor \quad \text{or} \quad k = \left\lfloor \frac{k_0 + h \times SFN}{N} \right\rfloor \bmod C \ ,$$

C being a constant, which is 10, preferably,

where L represents an aggregation level, in this case, each sub-frame k for repeated transmission is $k_0, k_0 + 1, \ldots, k_0 + N - 1$, SFN is a radio frame number of a sub-frame where $k_0$ is located, and h is the quantity of downlink sub-frames available in a radio frame.

RL1 shown in Fig. 2 is taken as an example. When a radio frame n and a radio frame n+1 are identical in $N_{\mathrm{CCE},k}$ and m, the same CCE position used respectively will generate a randomization effect due to different k values during two repeated sending operations.

In the embodiment, a modulus C is advantageous to prevent an SFN from being over-large (1023) so as to prevent k from being over-large, thereby avoiding too many $Y_k$ iterations.

Furthermore, the resources allocated between different repeated sending operations can be different by limiting the value of the sub-frame k and an initial value $Y_{-1}$, and the value of the sub-frame k and the $Y_{-1}$ value are limited according to at least one of the start sub-frame, the SFN and the repetition number. For instance,

$$L\left\{ (Y_k + m) \bmod \left\lfloor N_{\mathrm{CCE},k} / L \right\rfloor \right\} + i$$

$$k = \left\lfloor \frac{k_0}{N} \right\rfloor$$

$$Y_{k_0} = \left( A \cdot Y_{k_0 - 1} \right) \bmod D$$

$$Y_{-1} = n_{\mathrm{RNTI}} + C \quad \text{or} \quad Y_{-1} = n_{\mathrm{RNTI}} + 2^{16} \times C \quad \text{or} \quad Y_{-1} = n_{\mathrm{RNTI}} \times C \quad \text{or} \quad Y_{-1} = 2^E \times n_{\mathrm{RNTI}} + C \ , \quad A = 39827 \ ,$$

$$D = 65537$$

C is preferable $\left\lfloor \dfrac{h \times SFN}{N} \right\rfloor$ or $\left\lfloor \dfrac{k_0 + h \times SFN}{N} \right\rfloor$ or $\left\lfloor \dfrac{h \times SFN + n_{UE\_ID}}{N} \right\rfloor$ or $2^{16} \times \left\lfloor \dfrac{h \times SFN}{N} \right\rfloor$ or $2^{16} \times \left\lfloor \dfrac{k_0 + h \times SFN}{N} \right\rfloor$ or $0 < C \leq 2^E$,

where L represents an aggregation level, m represents a candidate set quantity, $N_{\mathrm{CCE},k}$ represents the quantity of CCEs of a sub-frame k, and $i = 0, \cdots, L-1$, and $n_{\mathrm{RNTI}}$ represents a value of a Radio Network Temporary Identity (RNTI).

In this case, by limiting the value of the sub-frame k and the $Y_{-1}$ value, when an identical user uses the same RNTI, a randomization effect is generated during the allocation of different positions of resources, for repeated transmission, of the start sub-frame.

Optionally, when respective sub-frames have unequal quantities of CCEs during repeated transmission, the positions of the resources are changed to ensure that the positions of the resources are the same.

For instance, resources used for repeatedly transmitting the control information are selected from $N_{\text{CCE},k}$ identical CCEs in the respective sub-frames, where $N_{\text{CCE},k}$ is a minimum value of the quantities of the CCEs in respective sub-frames during repeated transmission. Namely,

$$N_{\text{CCE},k} = \min\{N_{\text{CCE},k}\}$$

$$k = k_0, k_0 + 1, ..., k_0 + N - 1$$

In this case, resources allocated for each sub-frame during repeated transmission will not exceed the value range of a minimum CCE quantity.

Alternatively, a sub-frame having fewer CCEs in respective sub-frames during repeated transmission may be mapped when the positions of the resources are allocated. It is ensured that resources can be allocated by means of a mapping rule when the quantity of CCEs in each sub-frame for repeated transmission is smaller than that of CCEs of the start sub-frame.

Optionally, a mapping method is to conduct modulo processing over a sub-frame having fewer CCEs during calculation, such that positions of resources allocated for the start sub-frame may be mapped to available positions in the sub-frame. For instance,

$$L\left\{ (Y_k + m) \bmod(\left\lfloor N_{\text{CCE},k_0} / L \right\rfloor \bmod \left\lfloor N_{\text{CCE},k} / L \right\rfloor) \right\} + i$$

In this case, if the positions of the resources allocated for the sub-frame having fewer CCEs happen to exceed the total number, it is ensured, by conducting modulo processing over the exceeded parts in accordance with the total quantity of CCEs of the sub-frame, that the resources can be allocated.

Alternatively, another mapping method may be adopted. That is, many-to-one resource position mapping is carried out on a sub-frame having fewer CCEs during calculation. For instance,

$$\left\lfloor (L\left\{ (Y_k + m) \bmod \left\lfloor N_{\text{CCE},k_0} / L \right\rfloor \right\} + i) / M \right\rfloor ,$$

M being a positive integer, which is greater than 1, preferably.

In this case, if positions of resources allocated for a sub-frame having fewer CCEs happen to exceed the total number, it is ensured, by means of a mapping rule, that the resources can be allocated, wherein the mapping rule refers to mapping multiple CCE positions of a start sub-frame to one CCE position in a sub-frame having fewer CCEs.

Alternatively, the positions of the resources may be directly arranged for each sub-frame used for repeated transmission, starting from a CCE index C (that is, starting from an identical CCE serial number). Preferably, C is 0 or 16. In this case, the resources start from a position where a CCE serial number is smaller when the resources are allocated for each sub-frame used for repeated transmission.

Optionally, in the embodiments of the present disclosure, when the control information is control information for scheduling a public message, the base station determines, according to the predefined information and a public message type, the resources used for repeatedly sending the control information.

Optionally, an area where the resources used for repeatedly sending the control information for scheduling a public message of a Paging type and an RAR type are located is larger than an area where the resources used for repeatedly sending the control information for scheduling a public message of an SIB type are located.

Optionally, the area where the resources are located includes at least one of: an aggregation level quantity and a candidate set quantity.

In correspondence to the method for transmitting control information, according to an embodiment of the present disclosure, a method for receiving control information is also provided.

Fig. 3 is a flowchart of a method for receiving control information according to an embodiment of the present disclosure. As shown in Fig. 3, the method mainly includes the steps as follows.

Step S302: A terminal determines, according to predefined information, positions of resources used for repeatedly transmitting control information on multiple sub-frames, wherein the predefined information at least includes one of: a start sub-frame ko, an SFN, a repetition number or a repetition level N and a UE ID.

Step S304: The terminal repeatedly receives the control information having same content at the positions of the resources.

Optionally, the positions of the resources are contained in multiple sub-frames, and the positions of the resources on multiple sub-frames are the same.

Optionally, when it is needed to execute a new repeated receiving operation, positions of resources corresponding to the new repeated receiving operation are re-determined according to the predefined information corresponding to the new repeated receiving operation.

Optionally, the positions of the resources corresponding to two adjacent repeated receiving operations are different. For instance, four successive CCEs starting from a CCE numbered as 0 are used for repeatedly receiving a certain piece of control information, previously, and the four successive CCEs starting from the CCE numbered as 0 are no longer used for repeatedly receiving another piece of control information, currently.

Optionally, a value of a sub-frame k can be limited according to at least one of the start sub-frame, the SFN and the repetition number, and resources allocated between different repeated receiving operations are different by limiting the value of the sub-frame k. For instance,

$$L\left\{ (Y_k + m) \bmod \left\lfloor N_{\text{CCE},k} / L \right\rfloor \right\} + i$$

$$k = \left\lfloor \frac{k_0 + h \times SFN}{N} \right\rfloor \quad \text{or} \quad k = \left\lfloor \frac{k_0 + h \times SFN}{N} \right\rfloor \bmod C \quad,$$

C being a constant, which is 10, preferably,

where L represents an aggregation level, in this case, each sub-frame k for repeated transmission is $k_0, k_0+1,...,k_0 + N-1$, SFN is a radio frame number of a sub-frame where $k_0$ is located, and h is the quantity of downlink sub-frames available in a radio frame.

Optionally, the value of the sub-frame k and a $Y_{-1}$ value may be determined according to at least one of the start sub-frame, the SFN, the UE ID and the repetition number. The positions of the resources between different repeated receiving operations are different by limiting the value of the sub-frame k and the initial value $Y_{-1}$. For instance,

$$L\left\{ (Y_k + m) \bmod \left\lfloor N_{\text{CCE},k} / L \right\rfloor \right\} + i$$

$$k = \left\lfloor \frac{k_0}{N} \right\rfloor$$

$$Y_{k_0} = \left( A \cdot Y_{k_0 - 1} \right) \bmod D$$

$$Y_{-1} = n_{\text{RNTI}} + C \quad \text{or} \quad Y_{-1} = n_{\text{RNTI}} + 2^{16} \times C \quad \text{or} \quad Y_{-1} = n_{\text{RNTI}} \times C \quad \text{or} \quad Y_{-1} = 2^E \times n_{\text{RNTI}} + C \quad, \quad A = 39827 \quad,$$

$$D = 65537$$

C is preferably $\left\lfloor \frac{h \times SFN}{N} \right\rfloor$ or $\left\lfloor \frac{k_0 + h \times SFN}{N} \right\rfloor$ or $\left\lfloor \frac{h \times SFN + n_{UE\_ID}}{N} \right\rfloor$ or $2^{16} \times \left\lfloor \frac{h \times SFN}{N} \right\rfloor$ or $2^{16} \times \left\lfloor \frac{k_0 + h \times SFN}{N} \right\rfloor$ or

$0 < C \leq 2^E$,

where L represents an aggregation level, m represents a candidate set quantity, $N_{\text{CCE},k}$ represents the quantity of CCEs of a sub-frame k, $i = 0,\cdots,L-1$, and $n_{RNTI}$ represents a value of an RNTI.

Optionally, if respective sub-frames have unequal quantities of CCEs during repeated transmission, the positions of the resources are changed to ensure that the positions of the resources are the same.

Optionally, when the positions of the resources are changed, resources used for receiving the control information are selected from $N_{CCE,k}$ identical CCEs in the respective sub-frames, where $N_{CCE,k}$ is a minimum value of the quantities of the CCEs in respective sub-frames during repeated transmission. Namely,

$$N_{\mathrm{CCE},k} = \min\{N_{\mathrm{CCE},k}\}$$

$$k = k_0, k_0 + 1, ..., k_0 + N - 1$$

Alternatively, a sub-frame having fewer CCEs in respective sub-frames during repeated transmission may be mapped when the positions of the resources are determined.

For instance, a mapping method is to conduct modulo processing over a sub-frame having fewer CCEs during calculation, such that positions of resources allocated for the start sub-frame can be mapped to available positions in the sub-frame. For instance,

$$L\left\{ (Y_k + m)\bmod(\left\lfloor N_{\mathrm{CCE},k_0}/L \right\rfloor \bmod \left\lfloor N_{\mathrm{CCE},k}/L \right\rfloor)\right\} + i$$

Alternatively, another mapping method may be adopted. Many-to-one resource position mapping is carried out on a sub-frame having fewer CCEs during calculation. For instance,

$$\left\lfloor (L\left\{ (Y_k + m)\bmod \left\lfloor N_{\mathrm{CCE},k_0}/L \right\rfloor \right\} + i)/M \right\rfloor ,$$

M being a positive integer, which is greater than 1, preferably.

Alternatively, when the positions of the resources are changed, the positions of the resources can be directly determined for each sub-frame used for repeated transmission, starting from a CCE index C. That is, the positions of the resources are directly determined, starting from an identical CCE serial number, for each sub-frame. Preferably, C is 0 or 16.

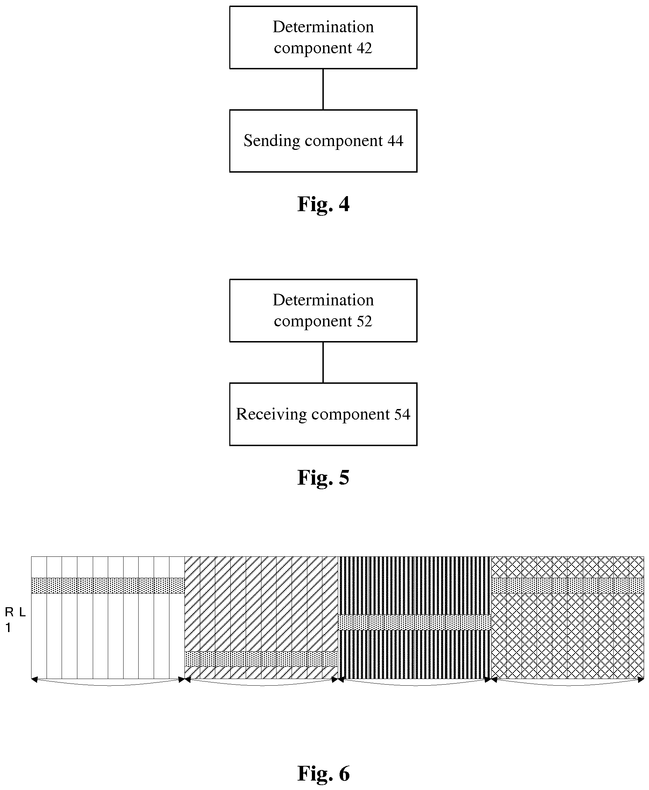

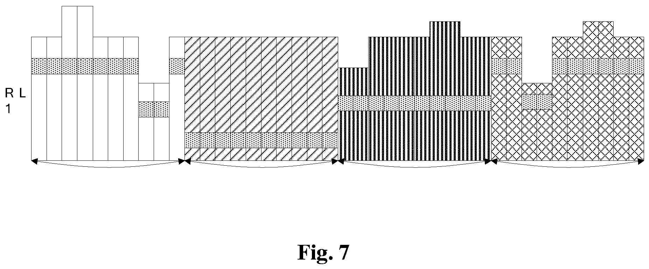

Fig. 6 is a diagram showing occupation of resources used for repeatedly transmitting control information under a coverage enhancement scenario according to a technical solution provided by an embodiment of the present disclosure. Fig. 7 is a diagram showing occupation of resources used for repeatedly transmitting control information when respective sub-frames have an unequal number of CCEs under a coverage enhancement scenario according to a technical solution provided by an embodiment of the present disclosure.

The embodiments of the present disclosure also provide an apparatus for transmitting control information. The apparatus may be located on a base station and is configured to implement the method for transmitting control information.

Fig. 4 is a structural diagram of an apparatus for transmitting control information according to an embodiment of the present disclosure. As shown in Fig. 4, the apparatus includes: a determination component 42, configured to determine, according to predefined information, resources used for repeatedly sending control information, wherein the predefined information at least includes one of: a start sub-frame ko, an SFN, a repetition number or a repetition level N and a UE ID; and a sending component 44, configured to repeatedly send the control information on the resources.

Optionally, the determination component 42 is further configured to re-determine, when it is needed to execute a new repeated sending operation, resources used for the new repeated sending operation according to the predefined information corresponding to the new repeated sending operation.

Optionally, the determination component 42 may include: a first determination element, configured to determine a value of a sub-frame k used for the new repeated sending operation according to the predefined information corresponding to the new repeated sending operation; and a first adjustment element, configured to make the resources allocated to the new repeated sending operation different from the resources used for the previous repeated sending operation by limiting a start position value of a search space of the sub-frame k.

Optionally, the determination component 42 may include: a second determination element, configured to determine a value of a sub-frame k and an initial value $Y_{-1}$ used for the new repeated sending operation according to the predefined information corresponding to the new repeated sending operation; and a second adjustment element, configured to make the resources allocated to the new repeated sending operation different from the resources used for the previous repeated sending operation by limiting a start position value of a search space of the sub-frame k and the initial value $Y_{-1}$.

Optionally, the apparatus may further include: a processing component, configured to change, if respective sub-frames have unequal quantities of CCEs, the positions of the resources in the respective sub-frames, such that the positions of the resources in the respective sub-frames are the same.

Optionally, the processing component is configured to change the positions of the resources in multiple sub-frames by means of one of the following modes:

selecting resources used for transmitting the control information from $N_{CCE,k}$ identical CCEs in the respective sub-frames, where $N_{CCE,k}$ is a minimum value of the quantities of the CCEs in respective sub-frames;
determining, after a sub-frame having fewer CCEs in the respective sub-frames is mapped, a CCE used for transmitting the control information in the sub-frame; and
directly allocating, for each sub-frame used for repeatedly transmitting the control information, the resources used for transmitting the control information starting from an identical CCE serial number.

Optionally, the processing component may be configured to map the sub-frame having fewer CCEs in the respective sub-frames by means of one of the following modes:

modulo processing, when the resources used for transmitting the control information in the sub-frame having fewer CCEs are allocated, the quantity of the CCEs in the sub-frame, such that the positions of the resources, allocated at a start sub-frame, used for repeatedly sending the control information are able to be mapped to available positions in the sub-frame having fewer CCEs; and
carrying out many-to-one resource position mapping when the resources used for transmitting the control information in the sub-frame having fewer CCEs are allocated.

According to the embodiments of the present disclosure, an apparatus for receiving control information is also provided. The apparatus may be located on a terminal, and is configured to implement the method for receiving control information.

Fig. 5 is a structural diagram of an apparatus for receiving control information according to an embodiment of the present disclosure. As shown in Fig. 5, the apparatus mainly includes: a determination component 52, configured to determine, according to predefined information, positions of resources used for repeatedly transmitting control information on multiple sub-frames, wherein the predefined information at least includes one of: a start sub-frame ko, an SFN, a repetition number or a repetition level N and a UE ID; and a receiving component 54, configured to repeatedly receive the control information having same content at the positions of the resources.

Optionally, the determination component 52 is further configured to re-determine, when it is needed to execute a new repeated receiving operation, positions of resources corresponding to the new repeated receiving operation according to the predefined information corresponding to the new repeated receiving operation.

Optionally, the determination component 52 may include: a first determination element, configured to determine a value of a sub-frame k corresponding to the new repeated receiving operation according to the predefined information corresponding to the new repeated operation; and a first adjustment element, configured to make the positions of the resources corresponding to the new repeated receiving operation different from the positions of the resources corresponding to the previous repeated receiving operation by limiting a start position value of a search space of the sub-frame k.

Optionally, the determination component 52 may include: a second determination element, configured to determine a value of a sub-frame k and an initial value $Y_{-1}$ corresponding to the new repeated receiving operation according to the predefined information corresponding to the new repeated receiving operation; and a second adjustment element, configured to make the positions of the resources allocated to the new repeated receiving operation different from the positions of the resources used for the previous repeated receiving operation by limiting a start position value of a search space of the sub-frame k and the initial value $Y_{-1}$.

Optionally, the apparatus may further include: a processing component, configured to change, if respective sub-frames have unequal quantities of CCEs, the positions of the resources in the respective sub-frames, such that the positions of the resources in the respective sub-frames are the same.

Optionally, the processing component is configured to change the positions of the resources in the respective sub-frames by means of one of the following modes:

selecting resources used for receiving the control information from $N_{CCE,k}$ identical CCEs in the respective sub-frames, where $N_{CCE,k}$ is a minimum value of the quantities of the CCEs in respective sub-frames;

determining, after a sub-frame having fewer CCEs in the respective sub-frames is mapped, a CCE used for transmitting the control information in the sub-frame having fewer CCEs; and

directly determining, for each sub-frame, the positions of the resources starting from an identical CCE serial number.

Optionally, the processing component may be configured to map the sub-frame having fewer CCEs in the respective sub-frames by means of one of the following modes:

modulo processing, when positions of resources used for transmitting the control information in the sub-frame having fewer CCEs are determined, CCE data in the sub-frame, such that the positions of the resources at a start sub-frame are able to be mapped to available positions in the sub-frame having fewer CCEs; and

carrying out many-to-one resource position mapping when positions of resources used for transmitting the control information in the sub-frame having fewer CCEs are determined.

According to the embodiments of the present disclosure, a system for transmitting control information is also provided. The system includes: a base station and a terminal, wherein the base station may include the apparatus for transmitting control information, and the terminal may include the apparatus for receiving control information.

The technical solutions provided by the embodiments of the present disclosure will be illustrated below by means of specific preferred embodiments.

Embodiment 1

The present embodiment describes and illustrates a control information transmission method under a Frequency Division Duplexing (FDD) system in detail.

A base station allocates resources on multiple sub-frames to a terminal and repeatedly sends control information having the same content according to a start sub-frame, an SFN and a repetition number, and positions of the resources used on multiple sub-frames are identical.

The control information is occupied by taking a CCE resource as a unit. An aggregation level AL=8 is selected, that is, eight CCE resources are used. In this case, a system bandwidth is 10MHz, control area resources occupied by other channels and pilots are removed, and a CCE quantity $N_{CCE,k_0}$ of a start sub-frame $k_0$ is 44. In this case, an RNTI value is 200. Resources allocated in a start sub-frame $k_0=0$, SFN=0 are calculated as k=0, $Y_0$ = (39827·200)mod 65537=35423 according to the following formulae, and the CCEs occupy eight successive CCE resources starting from a CCE resource numbered as 24.

$$L\left\{ (Y_k + m) \bmod \left\lfloor N_{\mathrm{CCE},k} / L \right\rfloor \right\} + i$$

$$Y_{k_0} = \left( A \cdot Y_{k_0 - 1} \right) \bmod D$$

$$Y_{-1} = n_{\mathrm{RNTI}}$$

$$A = 39827, \quad D = 65537$$

According to $k = \left\lfloor \dfrac{k_0 + h \times SFN}{N} \right\rfloor$ and $k = k_0, k_0 + 1,..., k_0 + N\text{-}1$, the same CCE resources are used in N=10, h=10 sub-frames for repeated transmission.

Then, resources allocated by the terminal in a start sub-frame $k_0=0$, SFN=1 with the same RNTI value are calculated as $Y_1$ =(39827·35423)mod65537=42359 according to the same formulae, and in this case, $k = \left\lfloor \dfrac{k_0 + h \times SFN}{N} \right\rfloor$. The CCEs occupy eight successive CCE resources starting from a CCE resource numbered as 32.

The base station repeatedly sends the control information having same content on the resources.

The terminal carries out blind detection to receive the repeatedly transmitted control information using the same candidate set by means of the above formulae in accordance with AL=1, 2, 4, 8 and each sub-frame.

By means of the present embodiment, the repeatedly transmitted control information can be allocated to the same resources, thereby reducing the blocking rate. Meanwhile, when a radio frame n and a radio frame n+1 are identical in $N_{CCE,k}$ and m, the same CCE position used respectively will generate a randomization effect during different repeated transmissions due to different k values during two repeated sending operations.

Embodiment 2

The present embodiment describes and illustrates a control information transmission method under a Time Division Duplexing (TDD) system in detail.

A base station allocates resources on multiple sub-frames to a terminal and repeatedly sends control information having the same content according to a start sub-frame, an SFN and a repetition number, and positions of the resources used on multiple sub-frames are identical.

The control information is occupied by taking a CCE resource as a unit. An aggregation level AL=4 is selected, that is, four CCE resources are used. In this case, a system bandwidth is 10MHz, control area resources occupied by other channels and pilots are removed, and a CCE quantity $N_{CCE,k_0}$ of a start sub-frame $k_0$ is 44. In this case, an RNTI value is 300. Resources allocated in a start sub-frame $k_0=0$, SFN=53 are calculated as k=2, $Y_0$ =(39827·300) mod 65537=20366, $Y_1$ =(39827·20366) mod 65537=30770, $Y_2$ = (39827·30770) mod 65537=427 according to the following formulae, and the CCEs occupy four successive CCE resources starting from a CCE resource numbered as 36.

$$L\left\{ (Y_k + m)\bmod \left\lfloor N_{CCE,k} / L \right\rfloor \right\} + i$$

$$Y_{k_0} = \left( A \cdot Y_{k_0 -1} \right)\bmod D$$

$$Y_{-1} = n_{RNTI}$$

$$A = 39827, \quad D = 65537$$

According to $k = \left\lfloor \dfrac{k_0 + h \times SFN}{N} \right\rfloor \bmod C$, C=10 and $k = k_0, k_0 + 1,..., k_0 + N$-1, the same CCE resources are used in N=10, h=4 sub-frames for repeated transmission. In this case, uplink and downlink sub-frame configurations are 1.

Then, resources allocated by the terminal in a start sub-frame ko=5, SFN=55 with the same RNTI value are calculated as k=5, $Y_3$ =(39827·427)mod65537=32046 $Y_4$ =(39827·32046)mod65537=28504, $Y_5$ =(39827·28504)mod65537=62431, according to the same formulae, and in this case, $k = \left\lfloor \dfrac{k_0 + h \times SFN}{N} \right\rfloor \bmod C$. The CCEs occupy four successive CCE resources starting from a CCE resource numbered as 24.

The base station repeatedly sends the control information having same content on the resources.

The terminal carries out blind detection to receive the repeatedly transmitted control information using the same candidate set by means of the above formulae in accordance with AL=1, 2, 4, 8 and each sub-frame.

By means of the present embodiment, the repeatedly transmitted control information can be allocated to the same resources, thereby reducing the blocking rate. Meanwhile, when a radio frame n and a radio frame n+1 are identical in $N_{CCE,k}$ and m, the same CCE position used respectively will generate a randomization effect during different repeated transmissions due to different k values during two repeated transmission operations, and too many $Y_k$ iterations caused by over-large SFN value are avoided, and the processing complexity is reduced.

Embodiment 3

The present embodiment describes and illustrates a control information transmission method under an FDD system in detail.

A base station allocates resources on multiple sub-frames to a terminal and repeatedly sends control information having the same content according to a start sub-frame, an SFN and a repetition number, and positions of the resources used on multiple sub-frames are identical.

The control information is occupied by taking a CCE resource as a unit. An aggregation level AL=8 is selected, that is, eight CCE resources are used. In this case, a system bandwidth is 10MHz, control area resources occupied by other channels and pilots are removed, a CCE quantity $N_{CCE,k_0}$ of a start sub-frame $k_0$ is 44, the CCE quantity of subsequent sub-frames 1 to 7 is the same as that of a sub-frame 0, and the CCE quantity $N_{CCE,k_0}$ of sub-frames 8 and 9 is 35. In this case, an RNTI value is 101. Resources allocated in a start sub-frame ko=0, SFN=0 are calculated as k=1, $Y_0$ =(39827·101)mod65537=24770, $Y_1$ =(39827·24770)mod65537=51866 according to the following formulae, where $N_{CCE,k}$ is a minimum value in each sub-frame during repeated transmission, that is, $N_{CCE,k}$ =min{$N_{CCE,k}$}, $k = k_0, k_0 + 1,...,k_0+N$-1. The CCEs occupy eight successive CCE resources starting from a CCE resource numbered as 16.

$$L\left\{ (Y_k + m) \bmod \left\lfloor N_{\text{CCE},k} / L \right\rfloor \right\} + i$$

$$Y_{k_0} = \left( A \cdot Y_{k_0 - 1} \right) \bmod D$$

$$Y_{-1} = n_{\text{RNTI}}$$

$$A = 39827 , \quad D = 65537$$

According to $k = \left\lfloor \dfrac{k_0 + h \times SFN}{N} \right\rfloor \bmod C$ , C=10 and $k = k_0, k_0 + 1,..., k_0 + N$-1, the same CCE resources are used in N=10, h=10 sub-frames for repeated transmission.

Then, resources allocated by the terminal in a start sub-frame ko=0, SFN=102 with the same RNTI value are calculated as k=2, $Y_2$ = (19127·51866)mod 65537=6479 according to the same formulae, and in this case,

$k = \left\lfloor \dfrac{k_0 + h \times SFN}{N} \right\rfloor \bmod C$ . The CCEs occupy eight successive CCE resources starting from a CCE resource numbered as 24.

The base station repeatedly sends the control information having same content on the resources.

The terminal carries out blind detection to receive the repeatedly transmitted control information using the same candidate set by means of the above formulae in accordance with AL=1, 2, 4, 8 and each sub-frame.

By means of the present embodiment, the repeatedly transmitted control information can be allocated to the same resources in each sub-frame having an unequal number of CCEs, thereby reducing the blocking rate. Meanwhile, when a radio frame n and a radio frame n+1 are identical in $N_{CCE,k}$ and m, the same CCE position used respectively will generate a randomization effect during different repeated transmissions due to different k values during two repeated transmission operations.

Obviously, those skilled in the art shall understand that all components or all steps in the present disclosure may be implemented using a general calculation apparatus, may be centralized on a single calculation apparatus or may be distributed on a network composed of multiple calculation apparatuses. Optionally, they may be implemented using executable program codes of the calculation apparatuses. Thus, they may be stored in a storage apparatus and executed by the calculation apparatuses, the shown or described steps may be executed in a sequence different from this sequence under certain conditions, or they are manufactured into each integrated circuit component respectively, or multiple components or steps therein is manufactured into a single integrated circuit component. Thus, the present disclosure is not limited to a combination of any specific hardware and software.

The above is only the preferred embodiments of the present disclosure, and is not used to limit the present disclosure. There may be various modifications and variations in the present disclosure for those skilled in the art. Any modifications, equivalent replacements, improvements and the like within the principle of the present disclosure shall fall within the protection scope defined by the appended claims of the present disclosure.

## **Industrial Applicability**

As above, a method, apparatus and system for transmitting and receiving control information, provided by the embodiments of the present disclosure, have the beneficial effects as follows. The blocking rate of control information during repeated transmission via a coverage enhancement MTC terminal can be reduced, thereby guaranteeing normal sending and receiving of data information, and reducing system overheads and time delays.

**Claims**

1. A method for transmitting control information, comprising:

   determining, by a base station according to predefined information, resources used for repeatedly sending control information, wherein the predefined information at least comprises one of: a start sub-frame ko, a System Frame Number, SFN, a repetition number or a repetition level N and a User Equipment, UE, Identity, ID; and
   repeatedly sending, by the base station, the control information on the resources.

2. The method as claimed in claim 1, wherein the resources are located at multiple sub-frames, wherein the resources are located at a same position on multiple sub-frames or locations of the resources on multiple sub-frames have a specific mapping relationship.

3. The method as claimed in claim 1 or 2, wherein when it is needed to execute a new repeated sending operation, resources used for the new repeated sending operation are re-determined according to the predefined information corresponding to the new repeated sending operation.

4. The method as claimed in claim 3, wherein the positions of the resources used for the new repeated sending operation and the positions of the resources used for the previous repeated sending operation are different.

5. The method as claimed in claim 3, wherein re-determining the resources used for the new repeated sending operation according to the predefined information corresponding to the new repeated sending operation comprises:

   determining a value of a sub-frame k used for the new repeated sending operation according to the predefined information corresponding to the new repeated sending operation; and
   making the resources used for the new repeated sending operation different from the resources used for the previous repeated sending operation by limiting a start position value of a search space of the sub-frame k.

6. The method as claimed in claim 3, wherein re-determining the resources used for the new repeated sending operation according to the predefined information corresponding to the new repeated sending operation comprises:

   determining a value of a sub-frame k and an initial value $Y_{-1}$ used for the new repeated sending operation according to the predefined information corresponding to the new repeated sending operation; and
   making the resources allocated to the new repeated sending operation different from the resources used for the previous repeated sending operation by limiting a start position value of a search space of the sub-frame k and the initial value $Y_{-1}$.

7. The method as claimed in claim 2, wherein if respective sub-frames have unequal quantities of Control Channel Elements, CCE, the positions of the resources in the respective sub-frames are changed, such that the positions of the resources in the respective sub-frames are the same.

8. The method as claimed in claim 7, wherein changing the positions of the resources in the respective sub-frames comprises: selecting resources used for transmitting the control information from $N_{CCE,k}$ identical CCEs in the respective sub-frames, where $N_{CCE,k}$ is a minimum value of the quantities of the CCEs in respective sub-frames.

9. The method as claimed in claim 7, wherein changing the positions of the resources in the respective sub-frames comprises: determining, after a sub-frame having fewer CCEs in the respective sub-frames is mapped, a CCE used for transmitting the control information in the sub-frame.

10. The method as claimed in claim 9, wherein mapping the sub-frame having fewer CCEs in the respective sub-frames comprises: modulo processing, when resources used for transmitting the control information in the sub-frame having fewer CCEs are allocated, the quantity of the CCEs in the sub-frame, such that the positions of the resources, allocated at a start sub-frame, used for repeatedly sending the control information are able to be mapped to available positions in the sub-frame having fewer CCEs.

**11.** The method as claimed in claim 9, wherein mapping the sub-frame having fewer CCEs in the respective sub-frames comprises: carrying out, when resources used for transmitting the control information in the sub-frame having fewer CCEs are allocated, many-to-one resource position mapping.

**12.** The method as claimed in claim 7, wherein changing the positions of the resources in the respective sub-frames comprises: directly allocating, for each sub-frame used for repeatedly transmitting the control information, the resources used for transmitting the control information starting from an identical CCE serial number.

**13.** The method as claimed in claim 1 or 2, wherein when the control information is control information for scheduling a public message, the base station determines, according to the predefined information and a public message type, the resources used for repeatedly sending the control information.

**14.** The method as claimed in claim 13, wherein an area where the resources used for repeatedly sending the control information for scheduling a public message of a Paging message, Paging, type and a Random Access Response message, RAR, type are located is larger than an area where the resources used for repeatedly sending the control information for scheduling a public message of a System Information Block, SIB, type are located.

**15.** The method as claimed in claim 14, wherein the area where the resources are located comprises at least one of: an aggregation level quantity and a candidate set quantity.

**16.** A method for receiving control information, comprising:

determining, by a terminal according to predefined information, positions of resources used for repeatedly transmitting control information on multiple sub-frames, wherein the predefined information at least comprises one of: a start sub-frame ko, a System Frame Number, SFN, a repetition number or a repetition level N and a User Equipment, UE, Identity, ID; and
repeatedly receiving, by the terminal, the control information having same content at the positions of the resources.

**17.** The method as claimed in claim 16, wherein the resources are located at multiple sub-frames, and the positions of the resources on multiple sub-frames are the same.

**18.** The method as claimed in claim 16 or 17, wherein when it is needed to execute a new repeated receiving operation, positions of resources corresponding to the new repeated receiving operation are re-determined according to the predefined information corresponding to the new repeated receiving operation.

**19.** The method as claimed in claim 18, wherein the positions of the resources corresponding to the new repeated receiving operation and the positions of the resources corresponding to the previous repeated receiving operation are different.

**20.** The method as claimed in claim 18, wherein re-determining the positions of the resources corresponding to the new repeated receiving operation according to the predefined information corresponding to the new repeated receiving operation comprises:

determining a value of a sub-frame k corresponding to the new repeated receiving operation according to the predefined information corresponding to the new repeated operation; and
making the positions of the resources corresponding to the new repeated receiving operation different from the positions of the resources corresponding to the previous repeated receiving operation by limiting a start position value of a search space of the sub-frame k.

**21.** The method as claimed in claim 18, wherein re-determining the positions of the resources corresponding to the new repeated receiving operation according to the predefined information corresponding to the new repeated receiving operation comprises:

determining a value of a sub-frame k and an initial value $Y_{-1}$ corresponding to the new repeated receiving operation according to the predefined information corresponding to the new repeated receiving operation; and
making the positions of the resources allocated to the new repeated receiving operation different from the positions of the resources used for the previous repeated receiving operation by limiting a start position value of a search space of the sub-frame k and the initial value $Y_{-1}$.

22. The method as claimed in claim 17, wherein if respective sub-frames have unequal quantities of Control Channel Elements, CCE, the positions of the resources in the respective sub-frames are changed, such that the positions of the resources in multiple sub-frames are the same.

23. The method as claimed in claim 22, wherein changing the positions of the resources in the respective sub-frames comprises: selecting resources used for receiving the control information from $N_{CCE,k}$ identical CCEs in the respective sub-frames, where $N_{CCE,k}$ is a minimum value of the quantities of the CCEs in respective sub-frames.

24. The method as claimed in claim 22, wherein changing the positions of the resources in the respective sub-frames comprises: determining, after a sub-frame having fewer CCEs in the respective sub-frames is mapped, a CCE used for transmitting the control information in the sub-frame having fewer CCEs.

25. The method as claimed in claim 24, wherein mapping the sub-frame having fewer CCEs in the respective sub-frames comprises: modulo processing, when positions of resources used for transmitting the control information in the sub-frame having fewer CCEs are determined, CCE data in the sub-frame, such that the positions of the resources at a start sub-frame are able to be mapped to available positions in the sub-frame having fewer CCEs.

26. The method as claimed in claim 24, wherein mapping the sub-frame having fewer CCEs in the respective sub-frames comprises: carrying out, when positions of resources used for transmitting the control information in the sub-frame having fewer CCEs are determined, many-to-one resource position mapping.

27. The method as claimed in claim 22, wherein changing the positions of the resources in the respective sub-frames comprises: directly determining, for each sub-frame, the positions of the resources starting from an identical CCE serial number.

28. An apparatus for transmitting control information, comprising:

   a determination component, configured to determine, according to predefined information, resources used for repeatedly sending control information, wherein the predefined information at least comprises one of: a start sub-frame ko, a System Frame Number, SFN, a repetition number or a repetition level N and a User Equipment, UE, Identity, ID; and
   a sending component, configured to repeatedly send the control information on the resources.

29. The apparatus as claimed in claim 28, wherein the determination component is further configured to re-determine, when it is needed to execute a new repeated sending operation, resources used for the new repeated sending operation according to the predefined information corresponding to the new repeated sending operation.

30. The apparatus as claimed in claim 29, wherein the determination component comprises:

   a first determination element, configured to determine a value of a sub-frame k used for the new repeated sending operation according to the predefined information corresponding to the new repeated sending operation; and
   a first adjustment element, configured to make the resources allocated to the new repeated sending operation different from the resources used for the previous repeated sending operation by limiting a start position value of a search space of the sub-frame k.

31. The apparatus as claimed in claim 29, wherein the determination component comprises:

   a second determination element, configured to determine a value of a sub-frame k and an initial value $Y_{-1}$ used for the new repeated sending operation according to the predefined information corresponding to the new repeated sending operation; and
   a second adjustment element, configured to make the resources allocated to the new repeated sending operation different from the resources used for the previous repeated sending operation by limiting a start position value of a search space of the sub-frame k and the initial value $Y_{-1}$.

32. The apparatus as claimed in claim 28, further comprising: a processing component, configured to change, if respective sub-frames have unequal quantities of Control Channel Elements, CCE, the positions of the resources in the respective sub-frames, such that the positions of the resources in the respective sub-frames are the same.

33. The apparatus as claimed in claim 32, wherein the processing component is configured to change the positions of the resources in multiple sub-frames by means of one of the following modes:

selecting resources used for transmitting the control information from $N_{CCE,k}$ identical CCEs in the respective sub-frames, where $N_{CCE,k}$ is a minimum value of the quantities of the CCEs in respective sub-frames; determining, after a sub-frame having fewer CCEs in the respective sub-frames is mapped, a CCE used for transmitting the control information in the sub-frame; and directly allocating, for each sub-frame used for repeatedly transmitting the control information, the resources used for transmitting the control information starting from an identical CCE serial number.

34. The apparatus as claimed in claim 33, wherein the processing component is configured to map the sub-frame having fewer CCEs in the respective sub-frames by means of one of the following modes:

modulo processing, when the resources used for transmitting the control information in the sub-frame having fewer CCEs are allocated, the quantity of the CCEs in the sub-frame, such that the positions of the resources, allocated at a start sub-frame, used for repeatedly sending the control information are able to be mapped to available positions in the sub-frame having fewer CCEs; and carrying out, when the resources used for transmitting the control information in the sub-frame having fewer CCEs are allocated, many-to-one resource position mapping.

35. An apparatus for receiving control information, comprising:

a determination component, configured to determine, according to predefined information, positions of resources used for repeatedly transmitting control information on multiple sub-frames, wherein the predefined information at least comprises one of: a start sub-frame ko, a System Frame Number, SFN, a repetition number or a repetition level N and a User Equipment, UE, Identity, ID; and a receiving component, configured to repeatedly receive the control information having same content at the positions of the resources.

36. The apparatus as claimed in claim 35, wherein the determination component is further configured to re-determine, when it is needed to execute a new repeated receiving operation, positions of resources corresponding to the new repeated receiving operation according to the predefined information corresponding to the new repeated receiving operation.

37. The apparatus as claimed in claim 36, wherein the determination component comprises:

a first determination element, configured to determine a value of a sub-frame k corresponding to the new repeated receiving operation according to the predefined information corresponding to the new repeated operation; and a first adjustment element, configured to make the positions of the resources corresponding to the new repeated receiving operation different from the positions of the resources corresponding to the previous repeated receiving operation by limiting a start position value of a search space of the sub-frame k.

38. The apparatus as claimed in claim 36, wherein the determination component comprises:

a second determination element, configured to determine a value of a sub-frame k and an initial value $Y_{-1}$ corresponding to the new repeated receiving operation according to the predefined information corresponding to the new repeated receiving operation; and a second adjustment element, configured to make the positions of the resources allocated to the new repeated receiving operation different from the positions of the resources used for the previous repeated receiving operation by limiting a start position value of a search space of the sub-frame k and the initial value $Y_{-1}$.

39. The apparatus as claimed in claim 35, further comprising: a processing component, configured to change, if respective sub-frames have unequal quantities of Control Channel Elements, CCE, the positions of the resources in the respective sub-frames, such that the positions of the resources in multiple sub-frames are the same.

**40.** The apparatus as claimed in claim 39, wherein the processing component is configured to change the positions of the resources in the respective sub-frames by means of one of the following modes:

selecting resources used for receiving the control information from $N_{CCE,k}$ identical CCEs in the respective sub-frames, where $N_{CCE,k}$ is a minimum value of the quantities of the CCEs in respective sub-frames;
determining, after a sub-frame having fewer CCEs in the respective sub-frames is mapped, a CCE used for transmitting the control information in the sub-frame having fewer CCEs; and
directly determining, for each sub-frame, the positions of the resources starting from an identical CCE serial number.

**41.** The apparatus as claimed in claim 40, wherein the processing component is configured to map the sub-frame having fewer CCEs in the respective sub-frames by means of one of the following modes:

modulo processing, when positions of resources used for transmitting the control information in the sub-frame having fewer CCEs are determined, CCE data in the sub-frame, such that the positions of the resources at a start sub-frame are able to be mapped to available positions in the sub-frame having fewer CCEs; and
carrying out many-to-one resource position mapping when positions of resources used for transmitting the control information in the sub-frame having fewer CCEs are determined.

**42.** A system for transmitting control information, comprising: a base station and a terminal, wherein the base station comprises the apparatus as claimed in any one of claims 28 to 34, and the terminal comprises the apparatus as claimed in any one of claims 35 to 41.

A base station determines, according to predefined information, resources used for repeatedly sending control information — S102

The base station repeatedly sends the control information on the resources — S104

**Fig. 1**

Radio frame n | Radio frame n+1 | Radio frame n+2 | Radio frame n+3

RL4

RL2

RL1

**Fig. 2**

A terminal determines, according to predefined information, positions of resources used for repeatedly transmitting control information on a plurality of sub-frames — S302

The terminal repeatedly receives the control information having same content at the positions of the resources — S304

**Fig. 3**

Determination
component 42

Sending component 44

**Fig. 4**

Determination
component 52

Receiving component 54

**Fig. 5**

R L
1

**Fig. 6**

**Fig. 7**

# INTERNATIONAL SEARCH REPORT

| International application No. |
| --- |
| **PCT/CN2014/085867** |

**A.   CLASSIFICATION OF SUBJECT MATTER**

H04W 76/02 (2009.01) i; H04L 1/00 (2006.01) n

According to International Patent Classification (IPC) or to both national classification and IPC

**B.   FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT, CNABS, CNKI, VEN, IEEE: control information, again, send, receive, transmit; SHI, Jing; DAI, Bo; XIA, Shuqiang; FANG, Huiying; LIU, Kun; CHEN, Xianming; LU, Zhaohua; initial subframe, system frame number, times of repetition, repetition grade, self-define, configure, pre, set, control+, resourc+, re-transmi+, repeat+, pdcch, predefin+, pre-defin+, pre-configur+

**C.   DOCUMENTS CONSIDERED TO BE RELEVANT**

| Category* | Citation of document, with indication, where appropriate, of the relevant passages | Relevant to claim No. |
| --- | --- | --- |
| X | CN 103391563 A (ZTE CORP.), 13 November 2013 (13.11.2013), description, paragraphs [0068]-[0085], and figures 5-8 | 1-4, 16-19, 28, 29, 35, 36, 42 |
| X | CN 101631007 A (DATANG MOBILE COMMUNICATIONS EQUIPMENT CO., LTD.), 20 January 2010 (20.01.2010), description, page 12, lines 1-5 and page 14, line 17 to page 16, line 1, and figure 6 | 1-4, 16-19, 28, 29, 35, 36, 42 |
| X | CN 103199974 A (ZTE CORP.), 10 July 2013 (10.07.2013), description, paragraphs [0117]-[0121] and [0277] | 1-4, 16-19, 28, 29, 35, 36, 42 |
| A | US 2013083740 A1 (TELEFONAKTIEBOLAGET L M ERICSSON), 04 April 2013 (04.04.2013), the whole document | 1-42 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 December 2014 (17.12.2014) | **31 December 2014 (31.12.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Rongjuan** Telephone No.: (86-10) **62411350** |
| --- | --- |

Form PCT/ISA/210 (second sheet) (July 2009)

# INTERNATIONAL SEARCH REPORT
## Information on patent family members

International application No.

**PCT/CN2014/085867**

| Patent Documents referred in the Report | Publication Date | Patent Family | Publication Date |
|---|---|---|---|
| CN 103391563 A | 13 November 2013 | WO 2013166847 A1 | 14 November 2013 |
| CN 101631007 A | 20 January 2010 | CN 101631007 B | 05 June 2013 |
| CN 103199974 A | 10 July 2013 | WO 2013104277 A1 | 18 July 2013 |
| | | EP 2804433 A1 | 19 November 2014 |
| US 2013083740 A1 | 04 April 2013 | WO 2013051980 A1 | 11 April 2013 |

Form PCT/ISA/210 (patent family annex) (July 2009)